# NEUE EUROPÄISCHE PATENTSCHRIFT

(11) **EP 0 788 523 B2**
(45) Veröffentlichungstag und Bekanntmachung des Hinweises auf die Entscheidung über den Einspruch: **27.11.2002**
(45) Hinweis auf die Patenterteilung: 05.01.2000
(21) Anmeldenummer: 95936547.9
(22) Anmeldetag: 25.10.1995
(51) Int. Cl.: C08G 18/08, C09D 175/04, B05D 7/00

(54) **Verfahren zur Herstellung von mehrschichtigen Lackierungen**
Process for making multilayer coatings
Procédé de fabrication de revêtements multicouches

(30) Priorität: 28.10.1994 DE 4438504
(43) Veröffentlichungstag der Anmeldung: 13.08.1997
(73) Patentinhaber: BASF Coatings Aktiengesellschaft, 48165 Münster (DE)
(72) Erfinder: GROSS, Lutz-Werner, D-45721 Haltern (DE); STEIN, Ralf, D-48153 Münster (DE); WEGNER, Egon, D-48143 Münster (DE); WIEMANN, Gudrun, D-48291 Telgte (DE)
(74) Vertreter: Fitzner, Uwe, Dr.
(86) Internationale Anmeldenummer: EP9504188
(87) Internationale Veröffentlichungsnummer: WO96013537

(56) Entgegenhaltungen:
- EP-A- 0 228 003
- EP-A- 0 548 845
- EP-A1- 0 320 552
- EP-A1- 0 355 682
- EP-A1- 0 590 484
- EP-B- 0 089 497
- DE-A- 4 005 961
- DE-C- 3 805 629
- Glausrit-Handbuch, Lacke und Farben der Glausrit-Handbuch, Lacke und Farben der BASF Farben + Fasern AG, 11. Auflage, Curt BASF Farben + Fasern AG, 11. Auflage, Curt R. Vincentz Verlag, Hannover, 1984, Seiten R. Vincentz Verlag, Hannover, 1984, Seiten 468-471 468-471
- "A Manual Of Resins For Surface Coatings", "A Manual Of Resins For Surface Coatings", vol. III, Selective Industrial training vol. III, Selective Industrial training Associates Linited London, UK, Associates Linited London, UK, veröffentlicht durch SITA Technology, 1987, veröffentlicht durch SITA Technology, 1987, Seiten 35-36 Seiten 35-36
- Römpp Lexikon "Lacke und Druckfarben", Römpp Lexikon "Lacke und Druckfarben", Seiten 249, 250 und 540 Seiten 249, 250 und 540
- Ullmanns Enzyklopädie der technischen Ullmanns Enzyklopädie der technischen Chemie, Band 21, Verlag Chemie, 1982, Chemie, Band 21, Verlag Chemie, 1982, Seiten 393 - 396 Seiten 393 - 396
- Paul Saraj, Surface Coatings, 1985, seite Paul Saraj, Surface Coatings, 1985, seite 374 374

## Beschreibung

Aus dem Stand der Technik sind Verfahren zur Lackierung von Fahrzeug-, insbesondere Automobilkarosserien bekannt, bei denen ein Elektrotauchlack appliziert und eingebrannt wird, ggf. ein Steinschlagzwischengrund appliziert und separat oder zusammen mit der aufzubringenden Füllerschicht eingebracht wird, ein Füller appliziert und eingebrannt wird und eine ein- oder mehrschichtige Decklackierung appliziert und eingebrannt wird.

Die Füllerschicht hat insbesondere die Aufgabe, Unebenheiten auszufüllen und abzudecken, um den Untergrund für den nachfolgenden Decklack zu egalisieren. Je besser diese Ausfüllung und Abdeckung von-Unebenheiten des Untergrundes ist, desto besser ist die optische Qualität der Gesamtlackierung. Neben der optischen Qualität sind auch wichtige mechanisch-technologische Eigenschaften der Gesamtlackierung, wie z.B. Korrosionsschutz und vor allem die Resistenz gegen Steinschlag und andere mechanische Angriffe ganz entscheidend von der Qualität der Füllerschicht und - falls vorhanden - der Steinschlagzwischengrundschicht abhängig.

Ein entsprechendes Verfahren, insbesondere zur Lackierung von Fahrzeugkarosserien ist beispielsweise aus der EP-A-238037 bekannt.

Früher wurden in der Lackindustrie ganz überwiegend Einbrennlacke auf Basis organischer Lösemittel zur Herstellung der Füller- und Steinschlagzwischengrund-schichten eingesetzt. Aus ökonomischen und ökologischen Gründen ist die Lackindustrie seit einigen Jahren bestrebt, Lacke auf Basis organischer Lösemittel durch wässrige Lacke zu ersetzen.

Die Bereitstellung derartiger wässriger Lacke ist unter anderem aus der DE-OS 4005961 bekannt. Die dort beschriebenen Lacke eignen sich in dem hier beschriebenen Verfahren zur Herstellung von Füller- bzw. Steinschlagzwischengrund-schichten. Im wesentlichen handelt es sich hierbei um einen Lack, der als Bindemittel eine Kombination aus wasserdünnbaren Polyurethanharzen, wasserverdünnbaren Polyesterharzen und Aminoharzen enthält.

Aus der EP-A-0 355 682 ist ein wäßriger Lack bekannt, der zur Herstellung von Füllerbeschichtungen geeignet ist, die sich durch eine verbesserte Steinschlagfestigkeit bei tiefen Temperaturen sowie durch gute Zwischenhaftung auszeichnet. Im wesentlichen werden als Bindemittel wasserdispergierbare Polyurethanharze eingesetzt. Nachteilig ist hier jedoch die erforderliche hohe Schichtdicke von 35 µm.

Abgesehen davon sind die erhaltenen Lackdicken noch nicht zufriedenstellend. Aus Kosten- und Umweltgründen ist nämlich die Automobilindustrie seit einigen Jahren bestrebt, möglichst dünne Lackfilme aufzubringen, ohne daß es zu einer Qualitätseinbuße im Vergleich zu den bisher üblichen dickeren Lackschichten kommt.

Bislang wurde die in der Verfahrensstufe 3 aufgetragene Lackschicht mit einer Schichtdicke von ungefähr 35 µm aufgetragen. Um Rohstoffe und Energie bei der Herstellung von mehrschichtigen Lacken, insbesondere bei der Lackierung von Automobilkarosserien, einzusparen, wurde vor allem versucht, die Dicke dieser Lackschicht zu verringern.

Die vorliegende Erfindung betrifft demgemäß ein Verfahren zur Herstellung von mehrschichtigen Lackierungen, bei dem
1) das Substrat mit einem Elektrotauchlack beschichtet wird.
2) die in Stufe 1 aufgebrachte Elektrotauchlackschicht ggf. eingebrannt wird,
3) die ggf. eingebrannte Elektrotauchlackschicht mit einem ersten wässrigen Lack überlackiert wird,
4) die in Stufe 3 aufgetragene Lackschicht ohne Einbrennschritt mit'einem zweiten wässrigen Lack überlackiert wird,
5) die in Stufe 4 aufgebrachte Lackschicht ggf. mit einem transparten Lack überlackiert wird und
6) die gesamte Lackierung eingebrannt wird.

Hierbei wird die unten beschriebene erfindungsgemäße Lackformulierung in der Stufe (3) verwendet. Dies führt zu dem überraschenden Ergebnis. das Schichtdicken von 15 um und weniger aufgetragen werden können, ohne daß es zu Qualitätseinbußen kommt.

Die in der Stufe 3 verwendete Lackschichtformulierung enthält a) ein Bindemittel, das aus einem wasserverdünnbaren Polyurethanharz besteht, das eine Säurezahl von 10 bis 60 und ein zahlenmittleres Molekulargewicht von 4000 bis 25000, vorzugsweise 8000 bis 25000, aufweist und herstellbar ist, indem aa) ein Polyester- und/oder Polyetherpolyol mit einem zahlenmittleren Molekulargewicht von 400 bis 5000 oder ein Gemisch aus solchen Polyester- und/oder Polyetherpolyolen, bb) ein Polyisocyanat oder einem Gemisch aus Polyisocyanaten, cc) eine Verbindung, die mindestens eine gegenüber lsocyanatgruppen reaktive und mindestens eine zur Anionenbildung befähigte Gruppe im Molekül aufweist, oder ein Gemisch aus solchen Verbindungen und ggf. dd) eine Hydroxyl- und/oder Aminogruppen enthaltende organische Verbindung mit einem Molekulargewicht von 40 bis 400 oder ein Gemisch aus solchen Verbindungen miteinander umgesetzt werden und das entstandende Reaktionsprodukt wenigstens teilweise neutralisiert wird, sowie b) Pigmente und/oder Füllstoffe enthält, wobei das Verhältnis von Bindemittel zu Pigment bzw. Füllstoff zwischen 0,5:1 und 1,5:1, bevorzugt zwischen 0,6:1 und 1,2:1, liegt, und c) bis zu 5 Gew.-% Aminoplastharz enthält und dass die Lackschichtformulierung in der Stufe 3 in einer Schichtdicke von weniger als 15 µm, aufgetragen wird, und die Pigmente und/oder Füllstoffe der in der in Stufe 3 aufgetragenen Lackschichtformulierung zwischen 20 und 80 Gew.-% bezogen auf die Gesamtmenge an Pigmenten und Füllstoffen Talkum enthalten.

Überraschenderweise führt die Anwendung eines aus den genannten Komponenten bestehenden Lackes zu einem Material, das als Füller- und Steinschlagzwischengrundschicht besonders gut verwendbbar ist, da es unerwartet stabil gegen mechanische Beanspruchungen, insbesondere Steinschlag und Stöße ist.

Die Komponente (a) kann aus aa), bb), cc) und ggf. dd) nach den dem Fachmann gut bekannten Methoden der Polyurethanchemie hergestellt werden (vgl. z.B. US-PS 4719132, DE-OS 3628124, EP-A-89497, EP-A-256540 und WO 87/03829). Als Komponente (aa) können gesättigte und ungesättigte Polyester- und/oder Polyetherpolyole, insbesondere Polyester- und/oder Polyetherdiole mit einem zahlenmittleren Molekulargewicht von 400 bis 5000 eingesetzt werden. Geeignete Polyetherdiole sind z.B. Polyetherdiole der allgemeinen Formel H(-O-(CHR¹)ₙ-)ₘOH. wobei R¹ = Wasserstoff oder ein niedrigerer, ggf. substituierter Alkylrest ist, n=2 bis 6, bevorzugt 3 bis 4 und m=2 bis 100, bevorzugt 5 bis 50 ist. Als Beispiele werden lineare oder verzweigte Polyetherdiole, wie Poly(oxyethylen)glykole, Poly (oxypropylen)glykole und Poly(oxybutylen)glykole genannt. Die ausgewählten Polyetherdiole sollen keine übermäßigen Mengen an Ethergruppen einbringen, weil sonst die gebildeten Polymere in Wasser anquellen. Die bevorzugten Polyetherdiole sind Poly(oxypropylen)glykole im Molmassenbereich Mₙ von 400 bis 3000.

Polyesterdiole werden durch Veresterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäure mit einer höheren Wertigkeit eingesetzt werden. Die Dicarbonsäuren und Diole können lineare oder verzweigte aliphatische, cycloaliphatische oder aromatische Dicarbonsäuren oder Diole sein.

Die zur Herstellung der Polyester verwendeten Diole bestehen beispielsweise aus Alkylenglykolen, wie Ethylenglykol, Propylenglykol, Butylenglykol, Butandiol-1,4, Hexandiol-1,6, Neopentylglykol und anderen Diolen, wie Dimethylolcyclohexan. Es können jedoch auch kleine Mengen an Polyolen, wie Trimethylolpropan, Glycerin, Pentaerythrit, zugesetzt werden. Die Säurekomponente des Polyesters besteht in erster Linie aus niedermolekularen Dicarbonsäuren oder ihren Anhydriden mit 2 bis 30, bevorzugt 4 bis 18 Kohlenstoffatomen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetrachlorphthalsäure und/oder dimerisierte Fettsäuren. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen, beispielsweise Trimellithsäureanhydrid oder das Addukt von Maleinsäureanhydrid an ungesättigte Fettsäuren anwesend sein.

Es können auch Polyesterdiole eingesetzt werden die durch Umsetzung eines Lactons mit einem Diol erhalten werden. Diese zeichnen sich durch die Gegenwart von endständigen Hydroxylgruppen und wiederkehrenden Polyesteranteilen der Formel (-CO-(CHR²)ₙ-CH₂ -O) aus. Hierbei ist n bevorzugt 4 bis 6 und der Substituent R² Wasserstoff, ein Alkyl- Cycloalkyl- oder Alkoxy-Rest.

Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole wird das unsubstituierte ε-Caprolacton, bei dem n den Wert 4 hat und alle R-Substituenten Wasserstoff sind, bevorzugt. Die Umsetzung mit Lacton wird durch niedermolekulare Polyole, wie Ethylglykol, 1,3-Propandiol, 1,4-Butandiol, Dimethylolcyclohexan gestartet. Es können jedoch auch andere Reaktionskomponenten, wie Ethylendiamin, Alkyldialkanolamine oder auch Harnstoff mit Caprolacton umgesetzt werden.

Als höhermolekulare Diole eignen sich auch Polylactamdiole, die durch Reaktion von beispielsweise ε-Caprolactam mit niedermolekularen Diolen hergestellt wird.

Als Komponente bb) können aliphatische und/oder cycloaliphatische und/oder aromatische Polyisocyanate eingesetzt werden. Als Beispiele für aromatische Polyisocyanate werden Phenylendiisocyanat, Toluylendiisocyanat, Xylylendiisocyanat, Biphenylendiisocyanat, Naphtylendiisocyanat und Diphenylmethandiisocyanat genannt.

Aufgrund ihrer guten Beständigkeit gegenüber ultraviolettem Licht ergeben (cyclo)aliphatische Polyisocyanate Produkte mit geringer Vergilbungsneigung. Beispiele hierfür sind Isophorondiisocyanat, Cyclopentylendiisocyanat, sowie Hydrierungsprodukte der aromatischen Diisocyanate wie Cyclohexylendiisocyanat, Methylcyclohexylendiisocyanat und Dicyclohexylmethandiisocyanat. Aliphatische Diisocyanate sind Verbindungen der Formel OCN-(CR³₂)ᵣ -NCO, worin r eine ganze Zahl von 2 bis 20, insbesondere 6 bis 8 ist und R³, das gleich oder verschieden sein kann, Wasserstoff oder einen niedrigeren Alkylrest mit 1 bis 8 C-Atomen, vorzugsweise 1 bis 2 C-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethylendiisocyanat, Methyltrimethylendiisocyanat und Trimethylhexandiisocyanat. Besonders bevorzugt werden als Diisocyanate Isophorondiisocyanat und Dicyclohexylmethandiisocyanat.

Die Komponente bb) muß hinsichtlich der Funktionalität der Polyisocyanate so zusammengesetzt sein, daß kein vernetztes Polyurethanharz erhalten wird. Die Komponente bb) kann neben Diisocyanaten auch einen Anteil an Polyisocyanaten mit Funktionalitäten über zwei - wie z.B. Triisocyanaten - enthalten. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Hierzu gehören beispielsweise das Biuret von Hexamethylendiisocyanat und Wasser, das Isocyanurat des Hexamethylendiisocyanats oder das Addukt von Isophorondiisocyanat an Trimethylolpropan. Die mittlere Funktionalität kann ggf. durch Zusatz von Monoisocyanaten gesenkt werden. Beispiele für solche kettenabbrechenden Monoisocyanate sind Phenylisocyanat, Cyclohexylisocyanat und Stearyl isocyanat.

Um die Wasserverdünnbarkeit der eingesetzten Polyurethanharze zu gewährleisten, müssen zur Anionenbildung befähigten Gruppen in die Polyurethanmoleküle eingebaut werden. Die zur Anionenbildung befähigten Gruppen sorgen nach ihrer Neutralisation dafür, daß das Polyurethanharz in Wasser stabil dispergiert werden kann. Das Polyurethanharz a) soll eine Säurezahl von 10 bis 60, vorzugsweise 20 bis 35 aufweisen. Aus der Säurezahl kann die in die Polyurethanmoleküle einzuführende Menge an zur Anionenbildung befähigten Gruppen berechnet werden.

Die Einführung von zur Anionenbildung befähigten Gruppen in die Polyurethanmoleküle erfolgt über den Einbau von Verbindungen cc) in die Polyurethanmoleküle, die mindestens eine gegenüber Isocyanatgruppen reaktive und eine zur Anionenbildung befähigte Gruppe im Molekül enthalten.

Als Komponente cc) werden vorzugsweise Verbindungen eingesetzt, die zwei gegenüber Isocyanatgruppen reaktive Gruppen im Molekül enthalten. Geeignete gegenüber Isocyanatgruppen reaktive Gruppen sind insbesondere Hydoxylgruppen sowie primäre und/oder sekundäre Aminogruppen. Geeignete zur Anionenbildung befähigte Gruppen sind Carboxyl-, Sulfonsäure- und/oder Phosphonsäuregruppen, wobei Carboxylgruppen bevorzugt sind. Als Komponente cc) können beispielsweise Alkansäuren mit zwei Substituenten an α-ständigen Kohlenstoffatomen eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben zwei bis etwa 25, vorzugsweise 3 bis 10 Kohlenstoffatome. Beispiele für die Komponente cc) sind Dihydroxypropionsäure. Dihydroxybernsteinsäure und Dihydroxybenzoesäure. Eine besonders bevorzugte Gruppe von Alkansäuren sind die α,α-Dimethylolalkansäuren der allgemeinen Formel R⁴-C(CH₂-OH)₂-COOH, wobei R⁴ für ein Wasserstoffatom oder eine Alkylgruppe mit bis zu etwa 20 Kohlenstoffatomen steht.

Beispiele für solche Verbindungen sind 2,2-Dimethylolessigsäure, 2,2-Dimethylolpropionsäure, 2,2-Dimethylolbuttersäure und 2,2-Dimethylolpentansäure. Die bevorzugte Dihydroxyalkansäure ist 2,2-Dimethylolpropionsaure. Aminogruppenhaltige Verbindungen sind beispielsweise α,δ-Diaminovaleriansäure, 3,4-Diaminobenzoesäure, 2,4-Diaminotoluolsulfonsäure und 2,4-Diamino-diphenylethersulfonsäure.

Die eingesetzten Polyurethanharze a) können ggf. unter Mitverwendung von Hydroxyl- und/oder Aminogruppen enthaltenden organischen Verbindungen mit einem Molekulargewicht von 40 bis 400, oder einem Gemisch aus solchen Verbindungen hergestellt werden (Komponente dd)). Der Einsatz der Komponente dd) führt zur Molekulargewichtserhöhung der Polyurethanharze. Als Komponente dd) können beispielsweise Polyole mit bis zu 20 Kohlenstoffatome je Molekül, wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Ditrimethylolpropanether, Pentaerythrit, 1,2-Cyclohexandiol, 1,4-Cyclohexandimethanol, Bisphenol A, Bisphenol F, Neopentylglykol. Hydroxypivalinsäureneopentylglykolester, hydroxyethyliertes oder hydroxypropyliertes Bisphenol A, hydriertes Bisphenol A und deren Mischungen eingesetzt werden.

Die Polyole werden im allgemeinen in Mengen von bis zu 30 Gew.-%, vorzugsweise 2 bis 20 Gew.-%, bezogen auf die eingesetzte Menge an Komponente aa) und dd) eingesetzt. Als Komponente dd) können auch Di- und/oder Polyamine mit primären und/oder sekundären Aminogruppen eingesetzt werden. Polyamine sind im wesentlichen Alkylen-Polyamine mit 1 bis 40 Kohlenstoffatom, vorzugsweise etwa 2 bis 15 Kohlenstoffatomen. Sie können Substituenten tragen, die keine mit lsocyanat-Gruppen reaktionsfähigen Wasserstoffatome haben. Beispiele sind Polyamine mit linearer oder verzweigter aliphatischer, cycloaliphatischer oder aromatischer Struktur und wenigstens zwei primären Aminogruppen. Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Methandiamin, Isophorondiamin, 4,4'-Diaminodicyclohexylmethan und Aminoethylethernolamin. Bevorzugte Diamine sind Hydrazin, Alkyloder Cycloalkyldiamine, wie Propylendiamin und 1-Amino-3-aminomethyl-2,5,5-trimethylcyclohexan. Es können auch Polyamine als Komponente dd) eingesetzt werden, die mehr als zwei Aminogruppen im Molekül enthalten. In diesen Fällen ist jedoch z.B. durch Mitverwendung von Monoaminen darauf zu achten, daß keine vernetzten Polyurethanharze erhalten werden. Solche brauchbaren Polyamine sind Diethylentriamin, Triethylentetramin, Dipropylentriamin und Dibutylentriamin. Als Beispiel für ein Monoamin wird Ethylhexylamin genannt.

Die Herstellung der Komponente a) gehört zum Stand der Technik und wird z.B. in der US-PS 4719132, DE-OS 3628124, EP-A-89497, EP-A-256540 und WO 87/03829 ausführlich beschrieben.

Zur Neutralisierung der Komponente a) können Ammoniak und/oder Amine (insbesondere Alkylamine), Aminoalkohole und cyclische Amine, wie Di- und Triethylamin, Dimethylaminoethanolamin, Diisopropanolamin, Morpholin, N-Alkylmorpholin, eingesetzt werden. Für die Neutralisation werden leicht flüchtige Amine bevorzugt.

Wichtig ist insbesondere die Beachtung des Verhältnisses von Bindemittel zu Pigment bzw. Füllstoff. Dies liegt nach der erfindungsgemäßen Lösung zwischen 0,5:1 und 1,5:1. Bevorzugt wird der Bereich zwischen 0,6:1 und 1,2:1.

Bewährt hat sich als Pigment bzw. Füllstoff Talkum. Dessen Anteil in der Gesamtmenge an Pigmenten und Füllstoffen liegt bei 20 bis 80 Gew.-%. Bevorzugt wird der Bereich von 30 bis 70 Gew.-%.

Es ist möglich in geringen Mengen Aminoplaste zuzusetzen. Diese machen nicht mehr als 5 Gew.-% bezogen auf die Gesamtmenge der Lackschichtformulierung aus.

Derartige Aminoplastharze sind dem Fachmann gut bekannt und werden von vielen Firmen als Verkaufsprodukte angeboten. Aminoplastharze sind Kondensationsprodukte aus Aldehyden, insbesondere Formaldehyd und beispielsweise Harnstoff, Melamin, Guanamin und Benzoguanamin. Die Aminoplastharze enthalten Alkohol-, vorzugsweise Methylolgruppen, die in der Regel teilweise oder bevorzugt vollständig mit Alkoholen verethert sind. Vorzugsweise werden wasserverdünnbare Aminoplastharze, insbesondere wasserverdünnbare Melamin-Formaldehydharze eingesetzt.

Polyisocyanatvernetzer können ebenfalls in der Lackschichtformulierung enthalten sein. Deren Anteile liegen regelmäßig unter 30 Gew.-%, vorzugsweise unter 10 Gew.-%. Die Vernetzerreaktivität ist im allgemeinen niedriger als 130 Grad Celsius.

Das Material kann nach Vortrocknung bei ca. 70 Grad Celsius mit Basislack oder Klarlack überschichtet werden und bei 130 Grad Celsius eingebrannt werden. Bei einer farblichen Abstimmung der erfindungsgemäßen Lackformulierung auf dem Basislack ist es sogar möglich, die Schichtdicken noch weiter zu reduzieren, ohne daß es zu einer Qualitätseinbuße kommt.

Die Lackformulierungen können neben den obengenannten Stoffen alle in der Lacktechnologie an sich bekannten Hilfs- und Zusatzmittel, wie organische Säuren, weitere Pigmente und Füllstoffe, Verlaufsmittel usw. enthalten. Der Fachmann kann mit Hilfe der erfindungsgemäßen Lacke problemlos wässrige Einbrennlacke herstellen, die als Steinschlagzwischengrund und/oder als Füller eingesetzt werden können. Es können aber auch wässrige Lacke hergestellt werden, die sich für andere Anwendungszwecke eignen.

Die Lackformulierung kann nach an sich bekannten Methoden, beispielsweise durch Spritzen, Streichen, Tauchen, Fluten, Rakeln oder Walzen auf beliebige Substrate, wie z.B. Metalle, Kunststoffe, Holz oder Glas aufgebracht werden. Die zu lackierenden Substrate können mit geeigneten Grundierungen versehen sein.

Die Erfindung wird in den folgenden Beispielen näher erläutert. Alle Angaben über Teile und Prozentsätze sind Gewichtsangaben, falls nicht ausdrücklich etwas anderes angegeben wird.

### 1. Herstellung von wasserverdünnbaren Polyurethanharzen

### 1.1 Polyurethanharz I

In einem trockenen Reaktionskessel mit Thermometer und Rückflußkühler werden unter Stickstoff 480,3 g einer 73 %-igen Lösung eines Polyesterpolyols (Säurezahl: 3,5 bis 4,0, hergestellt aus 39,5 Gewichtsteilen dimerisierter Fettsäure (Pripol^{R} 1013, Hersteller: Unichema) 21,7 Gewichtsteilen Hexandiol-1,6 und 11,7 Gewichtsteilen Isophthalsäüre) in Methylethylketon, 31,4 g Dimethylolpropionsäure, 169,1 g Dicyclohexylmethandiisocyanat (Desmodur^{R} W, Hersteller: Bayer AG), 6,5 g Neopentylglykol und 56,2 g Methylethylketon eingewogen und auf 85 Grad C erwärmt. Diese Temperatur wird so lange gehalten, bis ein NCO-Gehalt von 1,11 % erreicht ist. Nach Abkühlen auf 78 Grad C wird mit 17,8 g Trimethylolpropan und 91,3 g Methylethylketon versetzt. Sobald eine mit N-Methylpyrrolidon im Gewichtsverhältnis von 1:1 verdünnte Probe der Reaktionsmischung eine Viskosität zwischen 12 und 15 dPas aufweist werden 57,6 g Butyldiglykol zu dem Reaktionsgemisch gegeben und das Reaktionsgemisch noch 1 Stunde lang bei 78 Grad C gehalten. Zur Überführung des so hergestellten Polyurethanharzes in eine wasserverdünnbare Form werden 11,7 g Dimethylethanolamin und 1020 g destilliertes Wasser zugegeben. Aus der so erhaltenen wässrigen Dispersion wird anschließend das Methylethylketon bei 50 bis 60 Grad C im Vakuum abdestilliert. Dann wird der pH-Wert der Dispersion mit Dimethylethanolamin auf 7,2 und der Feststoffgehalt der Dispersion mit destilliertem Wasser auf 36,7 Gew.-% eingestellt.

### 2. Herstellung wässriger Lacke

### a) Wäßriger Lack I

Gemäß den in Tabelle 1 angegebenen Gewichtsteilen wird eine der oben beschriebenen wässrigen Polyurethandispersionen mit entionisiertern Wasser, einem handelsüblichen Verlaufsmittel auf Basis eines wasserverdünnbaren Acrylatharzes, mit einer Lösung eines handelsüblichen Antischaummittels auf Basis eines ungesättigten verzweigten Diols, gelöst in Butyldiglykol sowie N,N-Dimethylethanolamin versetzt und mit nachbehandeltem Titandioxid vom Rutiltyp und Talkum und einem handelsüblichen Flammruß angepastet. Diese Mischung wird in eine diskontinuierliche Laborsandmühle gefüllt und dispergiert, bis eine Feinheit von max. 10 µm im Grindometer nach Hegmann erreicht ist.

Aus den Dispergiermischungen wird dann unter Zusatz von weiterer Polyurethanharzdispersion und Butyldiglykol der wäßrige Lack I hergestellt, der mit N,N-Dimethylethanolamin auf einem pH-Wert von 7,2 bis 7,5 und mit deionisiertem Wasser auf eine Spritzviskosität von 33 sec (DIN 4) eingestellt wird.

### b) Wäßrige Lacke II und III

Lack II und III werden entsprechend Lack I hergestellt. Die Gewichtsanteile ergeben sich aus der Tabelle.

### 3. Applikation der wäßrigen Lacke und Prüfung der erhaltenen Lackfilme

Die Lacke werden mit einer elektrostatischen Hochrotationsanlage (Behr Ecobell, 45000 U/min, Ausflußrate: 120 ml/min, Spannung: 60 kV) in einem Auftrag mit einer Trockenfilmdicke von 15 µm auf mit einer handelsüblichen Elektrotauchlackierung beschichtete phosphatierte Stahlbleche gespritzt. Die Applikation erfolgte bei einer Lufttemperatur von 23 Grad Celsius und einer relativen Luftfeuchte von 60 %. Die gespritzten Tafeln wurden 5 min bei 23 Grad Celsius abgelüftet. Anschließend wird 5 min bei 70 Grad Celsius in einem Umluftofen vorgetrocknet. Zur Herstellung der Lackformulierung I und II wird mit einem handelsüblichen silbernen wäßrigen Metallic-Basislack elektrostatisch mit einer Trockenfilmdicke von 14 um überlackiert. Die so erhaltene Basislackschicht wird nach einer Ablüftzeit von 5 min bei 23 Grad Celsius und anschließender Vortrocknung von 5 min bei 70 Grad Celsius in einem Umlufttrockner mit einem handelsüblichen Zweikomponentenklarlack mit einer Trockenfilmdichte von 35 bis 40 µm überlackiert. Anschließend wird die gesamte Lackierung bei 130 Grad Celsius 30 min lang eingebrannt.

Zur Herstellung des Aufbaus mit Lack III wird ein farbkompatibler roter wäßriger Basislack elektrostatisch mit einer Trockenfilmdichte von 16 µm angesetzt. Im übrigen wird wie beschrieben verfahren.

Die erhaltenen Lackierungen zeigten einen sehr guten Verlauf, deckten die Struktur der Elektrotauchlackierung sehr gut ab und zeigten eine gute Zwischenhaftung zur Elektrotauchlackgrundierung.

Die Steinschlagbeständigkeit der erfindungsgemäß hergestellten Lackierungen ist trotz reduzierter Schichtdicke mindestens so hoch wie die Steinschlagbeständigkeit von Lackierungen, die gemäß DE-A-4O05961 hergestellt worden sind.

Die Ergebnisse der betreffenden Vergleichsversuche sind der Tabelle 2 zu entnehmen.

**Tabelle 1**

| | **wäßriger Lack I** | **wäßriger Lack II** | **wäßriger Lack III** |
|---|---|---|---|
| Polyurethandispersion 1 | 30,00 | 30,00 | 30,00 |
| Verlaufsmittel | 0,60 | 0,60 | 0,60 |
| entionisiertes Wasser | 10,00 | 12,00 | 10,00 |
| Antischaummittel | 2,00 | 2,00 | 2,00 |
| N, N-Dimethylethanolamin | 0,10 | 0,10 | 0,10 |
| Titandioxid | 5,00 | 1,00 | 5,00 |
| Talkum | 10,00 | 10,00 | 10,00 |
| Blanc Fixe(Sachtleben) | 4,00 | 0,00 | 4,00 |
| Bayferrox 180 (Bayer) | 0,00 | 2,00 | 0,00 |
| Bayferrox 130 (Bayer) | 0,00 | 4,00 | 0,00 |
| Paliogenmarron L4020 (BASF) | 0,00 | 2,00 | 0,00 |
| Aerosil R972 (Degussa) | 0,20 | 0,20 | 0,20 |
| Flammruß | 0,50 | 0,20 | 0,50 |
| Dispergiermischung | 62,40 | 64,10 | 62,40 |
| | 34,00 | 34,00 | 32,00 |
| Polyurethanharzdispersion I Cymel 327 (Cyanamid) | 0,00 | 0,00 | 2,00 |
| Butyldiglykol | 2,00 | 1,90 | 2,00 |
| deionisiertes Wasser | 1,60 | 0,00 | 1,60 |

**Tabelle 2**

| Lack | I***) | II***) | III***) | IV**) | V**) |
|---|---|---|---|---|---|
| Schichtdicke Steinschlagschutzschicht | 15 | 15 | 15 | 35 | 15 |
| | | | | | |
| Einzelschlagprüfung*) | 4/0 | 6/0 | 5/0 | 6/5 | 5/5 |

| | | | | | |
|---|---|---|---|---|---|
| *) Test besteht aus dem Beschuß einer Lacktafel im 90° Winkel mit einer Stahlkugel mit 2 mm Durchmesser, mit einer Geschwindigkeit von 250 km/h. wobei das Prüfblech auf -23°C abgekühlt wurde. Auswertung erfolgt in m² Abschlagfläche/Rostgradnote. Rostgradnote von 0 sehr gut (keine Durchschläge bis zum Substrat) bis 5 (gesamte Fläche Durchschlag bis zum Substrat) | | | | | |
| **) Decklackaufbau entspricht Probe Lack 1 und 3. | | | | | |
| ***) Referenzbeispiele | | | | | |

## Patentansprüche

1. Verfahren zur Herstellung von mehrschichtigen Lackierungen, bei dem
1) das Substrat mit einem Elektrotauchlack beschichtet wird.
2) die in Stufe 1 aufgebrachte Elektrotauchlackschicht ggf. vorgetrocknet und eingebrannt wird.
3) die eingebrannte Elektrotauchlackschicht mit einem ersten wässrigen Lack überschichtet wird.
4) die in Stufe 3 aufgetragene Lackschicht ggf. vorgetrocknet und ohne Einbrennschritt mit einem zweiten wässrigen Lack überschichtet wird,
5) die in Stufe 4 aufgebrachte Lackschicht ggf. mit einem transparenten Lack überlackiert wird und
6) die gesamte Lackierung eingebrannt wird,
**dadurch gekennzeichnet,**
**daß** in Stufe 3 eine Lackschichtformulierung verwendet wird, welche
a) ein Bindemittel enthält, das aus einem wasserverdünnbaren Polyurethanharz besteht, das eine Säurezahl von 10 bis 60 und ein zahlenmittleres Molekulargewicht von 4000 bis 25000, vorzugsweise 8000 bis 25000, aufweist und herstellbar ist, indem
aa) ein Polyester- und/oder Polyetherpolyol mit einem zahlenmittleren Molekulargewicht von 400 bis 5000 oder ein Gemisch aus solchen Polyester- und/oder Polyetherpolyolen,
bb) ein Polyisocyanat oder einem Gemisch aus Polyisocyanaten,
cc) eine Verbindung, die mindestens eine gegenüber Isocyanatgruppen reaktive und mindestens eine zur Anionenbildung befähigte Gruppe im Molekül aufweist, oder ein Gemisch aus solchen Verbindungen und ggf.
dd) eine Hydroxyl- und/oder Aminogruppen enthaltende organische Verbindung mit einem Molekulargewicht von 40 bis 400 oder ein Gemisch aus solchen Verbindungen miteinander umgesetzt werden und das entstandende Reaktionsprodukt wenigstens teilweise neutralisiert wird, und
b) Pigmente und/oder Füllstoffe enthält, wobei das Verhältnis von Bindemittel zu Pigment bzw. Füllstoff zwischen 0,5:1 und 1,5:1 liegt, und
c) bis zu 5 Gew.-% Aminoplastharz enthält, und
**daß** die Lackschichtformulierung in der Stufe 3 in einer Schichtdicke von weniger als 15 µm, aufgetragen wird, und die Pigmente und/oder Füllstoffe der in der in Stufe 3 aufgetragenen Lackschichtformulierung zwischen 20 und 80 Gew.-% bezogen auf die Gesamtmenge an Pigmenten und Füllstoffen Talkum enthalten.

2. Verfahren nach Anspruch 1, **dadurch gekennzeichnet, daß** das Verhältnis von Bindemittel zu Pigment bzw. Füllstoff in der in Stufe 3 aufgetragenen Lackschichtformulierung zwischen 0,6:1 und 1,2:1 liegt.

3. Verfahren nach einem der Ansprüche 1 bis 2, **dadurch gekennzeichnet, daß** der Anteil Talkum zwischen 30 und 70 Gew-% liegt.

4. Verfahren nach einem der Ansprüche 1 bis 3 **dadurch gekennzeichnet, daß** die in der in Stufe 3 aufgetragene Lackschichtformulierung Polyisocyanatvernetzer enthält.

5. Verfahren nach Anspruch 4, **dadurch gekennzeichnet, daß** die in der in Stufe 3 aufgetragene Lackschichtformulierung bis zu 30 Gew.-% Polyisocyanatvernetzer enthält.

6. Verfahren nach Anspruch 5, **dadurch gekennzeichnet, daß** die in der in Stufe 3 aufgetragene Lackschichtformulierung bis zu 10 Gew.-% Polyisocyanatvernetzer enthält.

7. Verfahren nach einem der Ansprüche 4 bis 6, **dadurch gekennzeichnet, daß** die Vernetzerreaktivität unter 130 Grad Celsius liegt.

## Claims

1. Process for the production of multicoat paint systems, in which
1) the substrate is coated with an electrodeposition coating material,
2) the electrodeposition coat applied in step 1 is optionally predried and baked,
3) the baked electrodeposition coat is coated over with a first aqueous coating material,
4) the coat applied in step 3 is optionally predried and, without a baking step, coated over with a second aqueous coating material,
5) the coat applied in step 4 is optionally coated over with a transparent coating material, and
6) the overall paint system is baked,
**characterized**
**in that**, in step 3, a coating formulation is used, which
a) comprises a binder which comprises a water-dilutable polyurethane resin which has an acid number of from 10 to 60 and a number-average molecular weight of from 4000 to 25,000, preferably from 8000 to 25,000, and can be prepared by reacting with one another
aa) a polyester- and/or polyether-polyol having a number-average molecular weight of from 400 to 5000, or a mixture of such polyester- and/or polyether-polyols,
bb) a polyisocyanate or mixture of polyisocyanates,
cc) a compound which has in the molecule at least one group which is reactive towards isocyanate groups and at least one group which is capable of forming anions, or a mixture of such compounds, and optionally
dd) a hydroxyl- and/or amino-containing organic compound having a molecular weight of from 40 to 400, or a mixture of such compounds, and at least partially neutralizing the resulting reaction product, and
b) comprises pigments and/or fillers, the ratio of binder to pigment and/or filler being between 0.5:1 and 1.5:1, and
c) comprises up to 5% by weight of amino resin, and
**in that** the coating formulation is applied in step 3 in a coat thickness of less than 15 µm, and the pigments and/or fillers of the coating formulation applied in step 3 comprise talc in an amount of between 20 and 80% by weight, based on the total amount of pigments and fillers.

2. Process according to Claim 1, **characterized in that** the ratio of binder to pigment and/or filler in the coating formulation applied in step 3 is between 0.6:1 and 1.2:1.

3. Process according to either of Claims 1 and 2, **characterized in that** the proportion of talc is between 30 and 70% by weight.

4. Process according to one of Claims 1 to 3, **characterized in that** the coating formulation applied in step 3 comprises polyisocyanate crosslinking agents.

5. Process according to Claim 4, **characterized in that** the coating formulation applied in step 3 comprises up to 30% by weight of polyisocyanate crosslinking agents.

6. Process according to Claim 5, **characterized in that** the coating formulation applied in step 3 comprises up to 10% by weight of polyisocyanate crosslinking agents.

7. Process according to one of Claims 4 to 6, **characterized in that** the reactivity of the crosslinking agents lies below 130 degrees Celsius.

## Revendications

1. Procédé pour la préparation de peintures à plusieurs couches, dans lequel
1) le substrat est revêtu d'une peinture électrophorétique appliquée par immersion,
2) la couche de peinture électrophorétique appliquée par immersion appliquée dans l'étape 1 est le cas échéant préséchée et cuite au four,
3) la couche de peinture électrophorétique appliquée par immersion est revêtue par un premier vernis aqueux,
4) la couche de vernis appliquée dans l'étape 3 est le cas échéant préséchée et revêtue sans étape de cuisson par un deuxième vernis aqueux,
5) la couche de vernis appliquée dans l'étape 4 est le cas échéant recouverte par un vernis transparent et
6) l'ensemble des peintures est cuit au four,
**caractérisé en ce qu'**on utilise dans l'étape 3 une composition de couche de vernis qui contient
a) un liant qui est constitué d'une résine polyuréthane pouvant être diluée dans l'eau, qui présente un indice d'acide de 10 à 60 et un poids moléculaire arithmétique moyen de 4000 à 25000, de préférence de 8000 à 25000, et qui peut être préparé **en ce qu'**on transforme l'un avec l'autre
aa) un polyesterpolyol et/ou un polyétherpolyol présentant un poids moléculaire arithmétique moyen de 400 à 5000 ou un mélange de ces polyesterpolyols et/ou polyétherpolyols,
bb) un polyisocyanate ou un mélange de polyisocyanates,
cc) un composé qui présente au moins un groupement réactif avec les groupements isocyanate et au moins un groupement capable de former des anions dans la molécule ou un mélange de ces composés et, le cas échéant,
dd) un composé organique contenant des groupements hydroxyle et/ou amino présentant un poids moléculaire de 40 à 400 ou un mélange de ces composés et le produit de réaction formé est au moins partiellement neutralisé et
b) des pigments et/ou des charges, le rapport liant à pigment ou, selon le cas, charge étant compris entre 0,5:1 et 1,5:1, et
c) jusqu'à 5% en poids de résine aminoplaste et
**en ce que** la composition de la couche de vernis dans l'étape 3 est appliquée en une épaisseur de couche inférieure à 15 µm et que les pigments et/ou les charges de la formulation de la couche de vernis appliquée dans l'étape 3 contiennent entre 20 et 80% en poids de talc, par rapport à la quantité totale de pigments et de charges.

2. Procédé selon la revendication 1, **caractérisé en ce que** le rapport liant à pigment ou, selon le cas, charge dans la composition de la couche de vernis appliquée dans l'étape 3 est compris entre 0,6:1 et 1,2:1.

3. Procédé selon l'une quelconque des revendications 1 à 2, **caractérisé en ce que** la proportion de talc est comprise entre 30 et 70% en poids.

4. Procédé selon l'une quelconque des revendications 1 à 3, **caractérisé en ce que** la composition de la couche de' vernis appliquée dans l'étape 3 contient des réticulants de polyisocyanate.

5. Procédé selon la revendication 4, **caractérisé en ce que** la composition de la couche de vernis appliquée dans l'étape 3 contient jusqu'à 30% en poids de réticulant de polyisocyanate.

6. Procédé selon la revendication 5, **caractérisé en ce que** la composition de la couche de vernis appliquée dans l'étape 3 contient jusqu'à 10% en poids de réticulant de polyisocyanate.

7. Procédé selon l'une quelconque des revendications 4 à 6, **caractérisé en ce que** la réactivité du réticulant est inférieure à 130°C.
